# EUROPÄISCHE PATENTSCHRIFT

(11) **EP 2 520 755 B1**
(45) Veröffentlichungstag und Bekanntmachung des Hinweises auf die Patenterteilung: **05.06.2019**
(21) Anmeldenummer: 12002075.5
(22) Anmeldetag: 23.03.2012
(51) Int. Cl.: E21B 7/20, F16L 55/165, E21B 17/04, F16L 55/18

(54) **Gestänge und Vorrichtung zum grabenlosen Sanieren von Rohrleitungen**
Rod and device for retrofitting pipelines without digging
Tringlerie et dispositif de nettoyage de conduites sans tranchée

(30) Priorität: 02.05.2011 DE 102011100186
(43) Veröffentlichungstag der Anmeldung: 07.11.2012
(73) Patentinhaber: TRACTO-TECHNIK GmbH & Co. KG, 57368 Lennestadt (DE)
(72) Erfinder: Koch, Elmar, 59889 Eslohe (DE); Fischer, Sebastian, 57368 Lennestadt (DE)
(74) Vertreter: König, Gregor Sebastian

(56) Entgegenhaltungen:
- DE-A1-102004 036 425
- DE-A1-102005 001 222
- DE-A1-102007 016 822
- DE-U1-202006 011 507
- US-A- 721 427
- US-A- 730 186

## Beschreibung

Die Erfindung betrifft ein Gestänge für eine Vorrichtung zum grabenlosen Sanieren von Rohrleitungen sowie eine solche Vorrichtung zum grabenlosen Sanieren von Rohrleitungen.

Beim grabenlosen Sanieren von Rohrleitungen kommen Vorrichtungen zum Einsatz, mit denen ein Neurohr in ein bereits im Erdreich verlegtes Altrohr eingezogen wird. Hierbei besteht entweder die Möglichkeit, das Altrohr vollständig zu ersetzen, indem dieses entweder im Erdreich zerstört und die dabei entstehenden Bruchstücke radial in das Erdreich verdrängt werden oder das Altrohr aus dem Erdreich herausgeschoben wird. Für ein Zerstören des Altrohrs wird ein Aufweitkopf, dessen Außendurchmesser größer als der Innendurchmesser des Altrohrs ist, durch das Altrohr gezogen, wodurch dieses von innen heraus geborsten und die Bruchstücke verdrängt werden. An dem Aufweitkopf kann direkt das Neurohr angehängt sein, das somit zeitgleich mit dem Zerstören des Altrohrs eingezogen wird. Ein Herausschieben des Altrohrs erfolgt über einen Adapter, der an dem hinteren Ende des Altrohrs angesetzt wird. Das aus der Bohrung kontinuierlich heraustretende Altrohr wird regelmäßig abschnittsweise abgetrennt und entsorgt. Auch beim Herausschieben des Altrohrs wird das Neurohr regelmäßig gleichzeitig eingezogen, indem dieses an den Adapter angehängt wird.

Soll das Altrohr nicht vollständig ersetzt, sondern vielmehr durch ein Auskleiden der Rohrinnenseite saniert werden, wird regelmäßig ein als sogenannter "Liner" ausgebildetes Neurohr in das Altrohr eingezogen. Bei einem Liner handelt es sich um ein Rohr oder Schlauch, dessen Wandstärke geringer als die eines Neurohrs ist.

Zum Einziehen des Neurohrs beim grabenlosen Sanieren von Rohrleitungen ist eine Zugvorrichtung erforderlich, die in der Regel in einer Baugrube angeordnet ist, die an den zu sanierenden Abschnitt des Altrohrs angrenzt. Die Zugvorrichtung ist über ein Zugmittel mit dem Aufweitkopf oder Adapter verbunden, an den das Neurohr angehängt ist. Es ist bekannt, hydraulische Seilwinden als Zugvorrichtungen einzusetzen, die jedoch - bei vertretbaren Kosten - nur relativ geringe Zugkräfte erzeugen können. Diese eignen sich daher lediglich für das grabenlose Ersetzen von Rohrleitungen mit kleinem Durchmesser oder für das Auskleiden mit einem Liner von Rohrleitungen bis zu einem mittleren Durchmesser. In vielen Fällen kommen daher hydraulische Linearzugvorrichtungen zum Einsatz, bei denen ein Antriebselement, das temporär mit dem Zugelement verbindbar ist, mittels eines oder mehreren hydraulischen Zylindern zyklisch in Richtung der Rohrlängsachse hin und her verfahren wird, um das Neurohr schrittweise in das Erdreich einzuziehen.

Diese Linearzugvorrichtungen werden regelmäßig mit einem Zugmittel in Form eines Gestänges kombiniert, das aus einer Vielzahl von miteinander verbundenen Gestängeschüssen besteht. Ein wesentlicher Vorteil bei der Verwendung von Gestängen liegt in der aus der Unterteilung in einzelne Gestängeschüsse resultierenden guten Handhabbarkeit, da das Gestänge dem Arbeitsfortschritt entsprechend durch einzelne Gestängeschüsse verlängert oder verkürzt werden kann.

Bei den meisten derartigen Gestängen werden die einzelnen Gestängeschüsse über Gewindeverbindungen miteinander verbunden. Gewindeverbindungen sind weit verbreitet, weil diese einfach und somit kostengünstig herstellbar sind. Ein wesentlicher Nachteil ist jedoch der hohe Montageaufwand für das Verbinden der einzelnen Gestängeschüsse. Dies gilt insbesondere, wenn hierfür maschinelle Löse- und Verbindungsvorrichtungen vorgesehen werden müssen, da die Gestängeschüsse bei den leistungsfähigeren Linearzugvorrichtungen eine manuell nicht mehr handhabbare Größe und ein entsprechendes Gewicht erreichen. Zudem muss auf eine ausreichende Sauberkeit der Gewindeteile der Gewindeverbindungen geachtet werden, denn verdreckte Gewindeteile verschleißen schnell und es besteht die Gefahr, dass die verdreckte Gewindeverbindung verklemmt und sich nicht mehr lösen lässt. Ein Sauberhalten der Gewindeteile ist auf den Baustellen regelmäßig mit einem nicht unerheblichen Aufwand verbunden.

Um diese Probleme zu vermeiden, wurde von der Anmelderin ein Gestänge entwickelt, dessen einzelne Gestängeschüsse über eine Steckverbindung miteinander verbunden werden. Dieses Gestänge ist u.a. in der DE 196 08 980 C2 beschrieben. Bei diesem Gestänge ist ein Ende jedes der Gestängeschüsse mit einem hakenförmigen Verbindungsteil versehen, das mit einem leiterartigen Vorsprung an dem entsprechenden anderen Ende jedes der Gestängeschüsse zusammenwirkt und dadurch die Übertragung von Zugkräften ermöglicht. Die die Zug- und Druckkräfte übertragenden Kontaktflächen der Verbindungsteile der beiden Gestängeschüsse sind dabei eben ausgebildet. Während durch diese Ausgestaltung bei der Übertragung von reinen Zug- oder Druckkräften eine sehr gleichförmige Verteilung der Kraft über der gesamte Kontaktfläche erreicht werden kann, hat sich als Nachteil gezeigt, dass bei einem gleichzeitigen Auftreten eines Biegemoments eine ungünstige Spannungsverteilung im Bereich der Kontaktfläche entsteht, durch die die Lebensdauer der Verbindungsteile und somit der Gestängeschüsse des Bohrgestänges selbst reduziert wird. Ein weiteres Beispielvorrichtung ist im Dokument DE102005001222 A1 zu sehen.

Ausgehend von diesem Stand der Technik lag der Erfindung daher die Aufgabe zugrunde, ein Gestänge für eine Vorrichtung zum grabenlosen Sanieren von Rohrleitungen anzugeben, dessen einzelne Gestängeschüsse über eine Steckkupplung miteinander verbunden werden, und die sich durch eine verbesserte Lebensdauer auszeichnet. Zudem sollte eine entsprechende, ein solches Gestänge umfassende Vorrichtung zum grabenlosen Sanieren von Rohrleitungen angegeben werden.

Diese Aufgabe wird durch die Gegenstände der unabhängigen Patentansprüche gelöst. Vorteilhafte Ausgestaltungen sind Gegenstand der jeweiligen abhängigen Patentansprüche und ergeben sind aus der nachfolgenden Beschreibung der Erfindung.

Bei dem Gestänge, dessen mindestens zwei Gestängeschüsse über eine Steckverbindung zugfest miteinander verbunden werden, ist zumindest einer der Gestängeschüsse an einem Ende mit einer Queröffnung (d.h. eine quer (aber nicht notwendigerweise senkrecht) zur Längsachse des Gestängeschusses ausgerichtete Öffnung) versehen, in die zum Ausbilden der Steckverbindung ein Quersteg (d.h. ein quer (aber nicht notwendigerweise senkrecht) zur Längsachse des Gestängeschusses ausgerichteter Steg) an einem Ende eines zweiten der Gestängeschüsse eingesteckt wird. Diese Steckverbindung ist dadurch gekennzeichnet, dass diejenigen Stirnflächen der Queröffnung und des Querstegs, die infolge einer Zugbelastung des Gestänges gegeneinander gedrückt werden, d.h. über die die Zugkräfte im Wesentlichen übertragen werden, bogenförmig ausgebildet sind.

Unter "bogenförmig" wird eine Ausgestaltung der Kontaktflächen verstanden, die um mindestens eine (beliebige) Raumachse gekrümmt ausgebildet ist, wobei die Krümmung um diese Raumachse gleichförmig, d.h. mit einem konstanten Radius (kreisbogenförmig) als auch ungleichförmig, d.h. mit wechselnden Radien vorgesehen sein kann. Selbstverständlich fallen auch räumlich gekrümmte und insbesondere kugelförmige gekrümmte Kontaktflächen unter den Begriff "bogenförmig".

Die bogenförmige Ausbildung der Kontaktflächen erfolgt vorzugsweise mit einer Krümmung um eine (oder mehrere) Achse(n), die bei dem bestimmungsgemäßen Gebrauch des Gestänges (in der Horizontalen) im Wesentlichen vertikal ausgerichtet und somit gleichzeitig senkrecht zur Längsachse der Gestängeschüsse sind.

Dadurch kann die von dem Gestänge gemäß der DE 196 08 980 C2 bekannte ungünstige Spannungsverteilung in dem Werkstoff der Verbindungsteile der Gestängeschüsse bei einer Überlagerung der Zugbelastung mit einem Biegemoment vermieden oder zumindest verringert werden. Da derartige Kräfteüberlagerungen im Bohrbetrieb regelmäßig auftreten, kann durch die erfindungsgemäße Ausgestaltung des Gestänges dessen Lebensdauer verlängert werden.

Vorzugsweise ist vorgesehen, dass jeder Gestängeschuss des Gestänges an einem seiner (längsaxialen) Enden mit einem ersten Verbindungsteil (d.h. z.B. der Queröffnung) und an dem anderen Ende mit dem zweiten Verbindungsteil (d.h. dann z.B. dem Quersteg) einer erfindungsgemäßen Steckverbindung versehen ist. Dadurch kann erreicht werden, dass immer zwei beliebige Gestängeschüsse des Gestänges miteinander verbunden werden können.

In einer bevorzugten Ausführungsform ist vorgesehen, dass die Stirnflächen der Queröffnung und des Querstegs korrespondierend bogenförmig ausgebildet sind, d.h. die jeweiligen übereinstimmenden Abschnitte der Stirnflächen weisen die gleiche Krümmung auf. Dadurch kann eine möglichst homogene Verteilung der von der Steckverbindung übertragenen Zugkräfte über der gesamten Kontaktfläche erreicht werden.

In einer bevorzugten Ausführungsform des Gestänges kann weiterhin vorgesehen sein, dass der Quersteg und die Queröffnung so ausgebildet sind, dass ein Verwinkeln der zwei Gestängeschüsse um einen (definierten) Winkelbereich möglich ist. Dieses Verwinkeln ist vorzugsweise in einer Ebene möglich, die bei dem bestimmungsgemäßen Gebrauch des Gestänges (in der Horizontalen) im Wesentlichen horizontal ausgerichtet ist, so dass die Längsachse der Gestängeschüsse in dieser Ebene oder parallel dazu verläuft. Dadurch kann ein definiertes Spiel in der Verbindung zwischen den einzelnen Gestängeschüssen des Gestänges erzeugt werden, dass das Auftreten eines die Steckverbindung belastenden Biegemoments vermeiden oder zumindest verringern kann.

Ein definiertes Verwinkeln der zwei Gestängeschüsse kann vorzugsweise dadurch erreicht werden, dass die Queröffnung breiter als der Quersteg ausgebildet ist. Auch ist es möglich, das Verwinkeln durch eine geeignete unterschiedliche Formgebung der Queröffnung und des Querstegs zu erreichen, beispielsweise mit einer Queröffnung mit einer konstanten Breite und einem Quersteg mit einer sich geringfügig verjüngenden Breite.

In einer bevorzugten Ausführungsform des Gestänges weist der Verbindungsteil eines von zwei zu verbindenden Gestängeschüssen einen Verriegelungsvorsprung auf, der im verbundenen Zustand in eine Vertiefung in dem anderen Gestängeschuss eingreift, um ein Lösen der zwei verbundenen Gestängeschüsse durch eine Parallelverschiebung zu verhindern. Vorzugsweise kann vorgesehen sein, dass ein Verbinden/Lösen der zwei Gestängeschüsse nur dann möglich ist, wenn diese in einem Winkel, d.h. nicht-koaxial zueinander angesetzt werden und dann in die koaxiale Lage geschwenkt werden (in der dann der Quersteg in Verbindung mit der Queröffnung die Zug- und Druckbelastung abstützt und der Verriegelungsvorsprung ein seitliches Lösen (in zumindest einer Richtung)). Dieses Verschwenken erfolgt vorzugsweise in einer Ebene, die quer und besonders bevorzugt senkrecht zu der Ebene ist, in der die beiden Gestängeschüsse definiert verwinkelbar sind.

Bei der Verwendung des Gestänges beim grabenlosen Sanieren von Rohrleitungen müssen regelmäßig auch Druckkräfte - wenn auch in geringerem Maße - übertragen werden, insbesondere, um zu Beginn des Sanierungsprozesses das vordere Ende des Gestänges ausgehend von der Baugrube, in der der Linearantrieb der Vorrichtung angeordnet ist, zu dem gegenüberliegenden Ende des zu sanierenden Rohrleitungsabschnitts zu schieben, um dieses dort mit dem Neurohr zu verbinden. Vorzugsweise kann daher vorgesehen sein, dass auch diejenigen Stirnflächen der Queröffnung und des Querstegs, die diese Druckkräfte übertragen, bogenförmig ausgebildet sind.

Zudem kann die erfindungsgemäße Steckverbindung noch mit Verriegelungselementen versehen sein, die bei der Ausübung einer Druckbelastung auf das Gestänge verhindern, dass das Gestänge knickt, d.h. dass sich die einzelnen Gestängeschüsse des Gestänges ungewollt zueinander verwinkeln und dadurch gegebenenfalls voneinander lösen. Hierzu kann der Verbindungsteil von einem von zwei zu verbindenden Gestängeschüssen mit mindestens einem Sicherungsvorsprung versehen sein, der in eine Vertiefung des anderen Gestängeschusses eingreift, um bei einer Druckbelastung ein Verwinkeln der zwei Gestängeschüsse zu verhindern.

Eine Vorrichtung zum grabenlosen Sanieren von Rohrleitungen weist zumindest einen Linearantrieb sowie ein erfindungsgemäßes Gestänge auf, wobei der Linearantrieb zur Bewegung des Gestänges temporär mit dem Gestänge verbunden ist.

Die temporäre Verbindung des Linearantriebs mit dem Gestänge kann kraftschlüssig sein; vorzugsweise ist jedoch vorgesehen, dass der Linearantrieb formschlüssig an dem Gestänge angreift. Dadurch kann ein ungewolltes Durchrutschen in Folge der beim grabenlosen Sanieren von Rohrleitungen häufig sehr hohen Kräfte in Verbindung mit einer Verschmutzung der Gestänge vermieden werden. Der formschlüssige Angriff des Linearantriebs an dem Gestänge kann beispielsweise dadurch erreicht werden, dass dieser in Vertiefungen oder Vorsprünge eingreift, die zumindest abschnittsweise und vorzugsweise in regelmäßiger Teilung in/an den Gestängeschüssen vorgesehen sind.

Die Offenbarung wird nachfolgend anhand eines in den Zeichnungen dargestellten Ausführungsbeispiels näher erläutert.

In den Zeichnungen zeigt:
- Fig. 1: in einer schematischen Darstellung eine Vorrichtung zum Sanieren von Rohrleitungen im Einsatz;
- Fig. 2: eine Steckverbindung in einer Draufsicht, mit der die einzelnen Gestängeschüsse des bei der Vorrichtung gemäß Fig. 1 zum Einsatz kommenden Gestänges miteinander verbunden werden;
- Fig. 3: die Steckverbindung gemäß Fig. 2 in einem Längsschnitt;
- Fig. 4: einen ersten der zwei Verbindungsteile der Steckverbindung gemäß Fig. 2 und 3 in einer isometrischen Ansicht;
- Fig. 5: den zweiten Verbindungsteil der Steckverbindung gemäß Fig. 2 und 3 in einer Draufsicht; und
- Fig. 6: die Steckverbindung gemäß Fig. 2 in einer Seitenansicht.

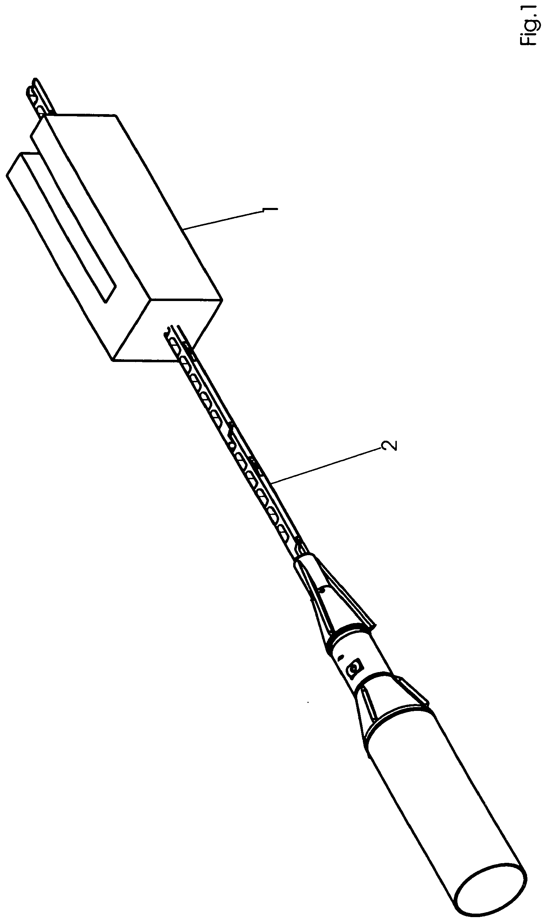

In Fig. 1 ist eine Vorrichtung zum grabenlosen Sanieren von Rohrleitungen gezeigt, die eine Zugvorrichtung 1 beispielsweise in Form einer hydraulischen Linearzugvorrichtung aufweist. Die Zugvorrichtung 1 ist zum Ziehen eines Gestänges 2 ausgestaltet, das endseitig - von der Zugvorrichtung 1 beabstandet - mit einem Aufweitkörper verbunden ist. Der Aufweitkörper kann über einen Adapter mit einem Neurohr verbunden sein, das somit zeitgleich mit dem Zerstören des Altrohrs eingezogen werden kann.

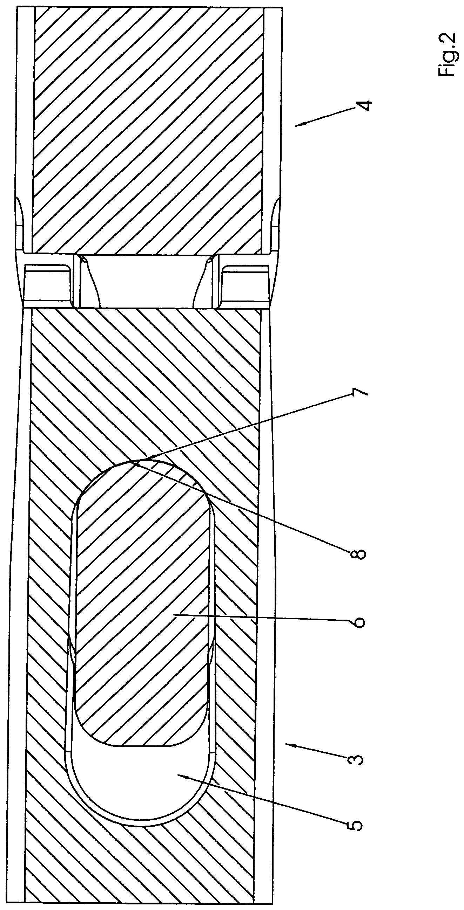

In Fig. 2 sind in einer Detailansicht Enden zweier miteinander verbundener Gestängeschüsse 3, 4 des Gestänges 2 gezeigt, wobei eine Steckkupplung bzw. Steckverbindung vorgesehen ist. Der Linke der beiden in Fig. 2 zumindest teilweise gezeigten Gestängeschüsse 3, 4 ist an einem Ende mit einer Queröffnung 5 versehen. Zum Ausbilden der Steckverbindung ist ein Quersteg 6 des Rechten der beiden in Fig. 2 zumindest teilweise gezeigten Gestängeschüsse 3, 4 in die Queröffnung 5 eingesteckt.

Aus der in Fig. 2 gezeigten Ansicht ist zu entnehmen, dass die Queröffnung 5 eine bogenförmig ausgestaltete Kontaktfläche 7 aufweist, die um eine senkrecht zur Papierebene verlaufende Achse gekrümmt ist. Die als "Dose" der Steckverbindung wirkende Queröffnung 5 weist in ihrem hinteren Bereich, d.h. dem Bereich, auf den der Quersteg 6 bei einer Zugbelastung des Gestänges 2 einwirkt, eine bogenförmige, insbesondere kugelförmige, Schulter auf.

Der Quersteg 6 als "Stecker" der Steckverbindung weist eine Stirnfläche 8 auf, die ebenfalls bogenförmig um eine senkrecht zur Papierebene verlaufende Achse gekrümmt ist und in Folge einer Zugbelastung des Gestänges gegen die Stirnfläche 7 der Queröffnung 5 gedrückt werden kann. Die Stirnfläche 7 der Queröffnung 5 und die Stirnfläche 8 des Querstegs 6 sind korrespondierend bogenförmig ausgebildet, d.h. die in Anlage zueinander kommenden Stirnflächen 7, 8 weisen die gleiche Krümmung auf.

Aufgrund der bogenförmigen Ausbildung der Stirnflächen 7, 8 liegt selbst bei schrägem Zug, d.h. einer Abwinklung bis zu mehreren Winkelgrad von Quersteg 6 und Queröffnung 5, die Stirnfläche 8 des Querstegs 6 immer vollflächig an der Stirnfläche 7 der Queröffnung 5 an. Beispielsweise berührt selbst bei einer 2°-Abwinklung der Quersteg 6 nasenseitig nicht eine Seitenwange der Queröffnung 5, so dass keine Biegemomente auf die Nase des als Stecker wirkenden Querstegs 6 wirken und ein mögliches Abreißen des Querstegs 6 vermieden wird.

Um ein definiertes Verwinkeln von die Steckverbindung bildenden Queröffnung 5 und Quersteg 6 weiter zuzulassen, ist die Queröffnung 5 breiter als die Breite des Querstegs 6 ausgestaltet. Die Breite der Queröffnung 5 nimmt in Längsrichtung von dem Gestängeschuss 4 zu. Die Stirnfläche 7 der Queröffnung 5 umschließt über einen größeren Winkelbereich die Stirnfläche 8 des Querstegs 6. Der Winkelbereich der Stirnfläche 8 des Querstegs 6 ist geringer als der Winkelbereich der Stirnfläche 7 der Queröffnung 5. Die Stirnfläche 8 des Querstegs 6 geht bezogen auf die zwischen den beiden Stirnflächen 7, 8 ausgebildete Kontaktfläche früher in eine Gerade, insbesondere in eine zur Längsachse im Wesentlichen senkrecht verlaufende Gerade über. Im in der Fig. 2 dargestellten Ausführungsbeispiel weist der Quersteg 6 eine konstante Breite auf.

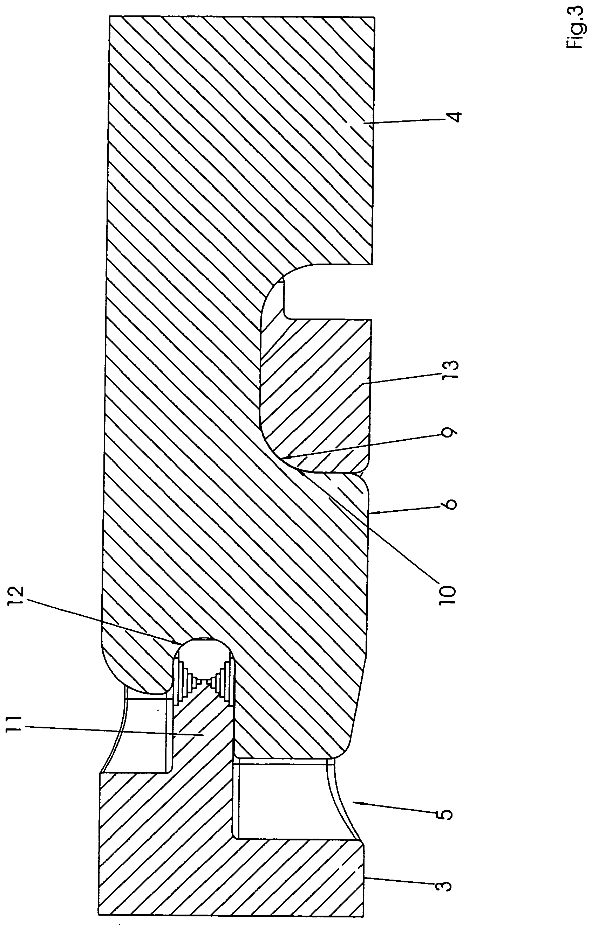

Wie aus Fig. 3 zu erkennen ist, bilden die Queröffnung 5 und der Quersteg 6 auch bogenförmige Kontaktflächen 9, 10 an den Stirnflächen 7, 8 aus, die um eine senkrecht zur Papierebene verlaufende Achse gekrümmt sind. Die bogenförmige Ausbildung der Kontaktflächen 9, 10 erfolgt somit um mehrere Achsen, die senkrecht zur Längsachse der Gestängeschüsse 3, 4 ausgerichtet sind. Die Stirnfläche 7 bzw. 8 und die Kontaktfläche 9 bzw. 10 sind Teilflächen einer Gesamtfläche, die eine Anlagefläche des jeweiligen Elements, d.h. Queröffnung 5 oder Quersteg 6, für das entsprechend andere Element der Steckverbindung bildet.

Der Gestängeschuss 3 weist einen Verriegelungsvorsprung 11 auf, der - wie in Fig. 3 zu erkennen - im verbundenen Zustand in eine Vertiefung 12 in den Gestängeschuss 4 eingreift. Zum Verbinden der beiden Gestängeschüsse 3, 4 muss der Gestängeschuss 4 in einem Winkel zum Gestängeschuss 3 so geführt werden, dass der Quersteg 6 durch die durch den Verriegelungsvorsprung 11 und den in Fig. 3 gezeigten Abschnitt 13 geführt und zum Verriegeln in eine koaxiale Lage zum Gestängeschuss 3 verschwenkt wird. Das Verschwenken erfolgt in einer Ebene, die quer zu der Ebene ist, in der die beiden Gestängeschüsse 3, 4 zueinander verwinkelbar sind.

Einer möglichen Verwinkelung zwischen den beiden Gestängeschüssen 3, 4 wird auch dadurch Rechnung getragen, dass die Gestängeschüsse 3, 4 an dem die Queröffnung 5 aufweisenden Ende eine geringere Breite in Bezug auf die Längsrichtung quer zur Queröffnung 5 der Gestängeschüsse 3, 4 aufweisen als die Breite im Bereich der Queröffnung 5. Die Verringerung der endseitigen Breite der Gestängeschüsse 3, 4 im Bereich der Queröffnung 5 ist an die sich im Einsatz des Gestänges 2 ergebende mögliche Abwinklung angepasst, indem der Gestängeschuss 3, 4 auch bei einer Abwinklung nicht mit seinem Ende den Querschnitt des Gestänges 2 im Bereich der Steckverbindung erhöht.

In Fig. 3 ist gezeigt, dass über den Verriegelungsvorsprung 11 des Gestängeschusses 3 und die Vertiefung 12 des Gestängeschusses 4 auch Druckkräfte vom einen Gestängeschuss 3, 4 auf den Anderen übertragen werden können, da der Verriegelungsvorsprung 11 und die Vertiefung 12 bei Druckbelastung eines der beiden Gestängeschüsse 3, 4 in Längsrichtung des Gestänges 2 in Kontakt zueinander gelangen können. Dazu weisen die in Anlage zueinander gelangenden Flächen von Vertiefung 12 und Verriegelungsvorsprung 11 zumindest bogenförmig ausgebildete Teilflächen auf.

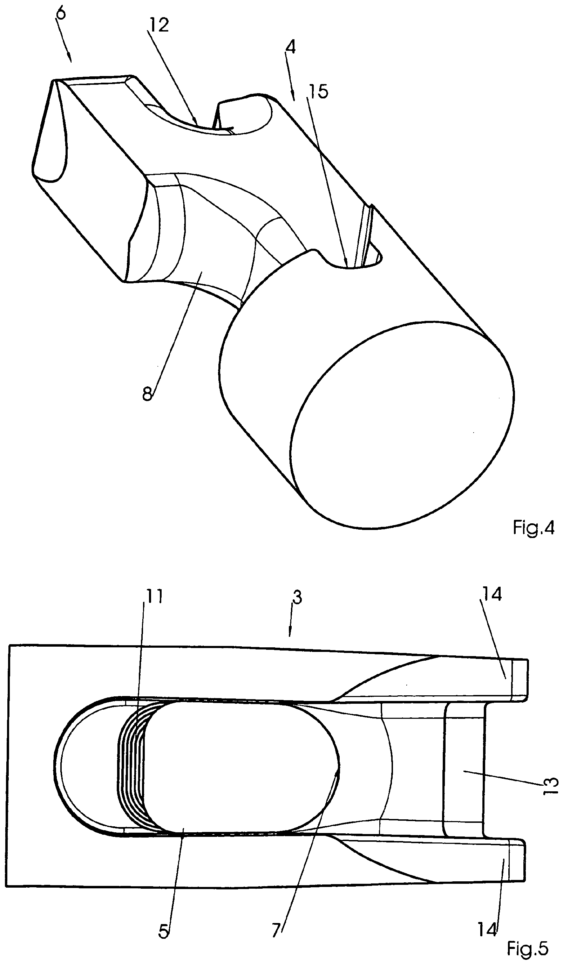

In den Fig. 4 und 5 sind die Enden 4 und 5 des Gestängeschusses 4 bzw. 3 in isometrischer Darstellung bzw. in Draufsicht einzeln gezeigt.

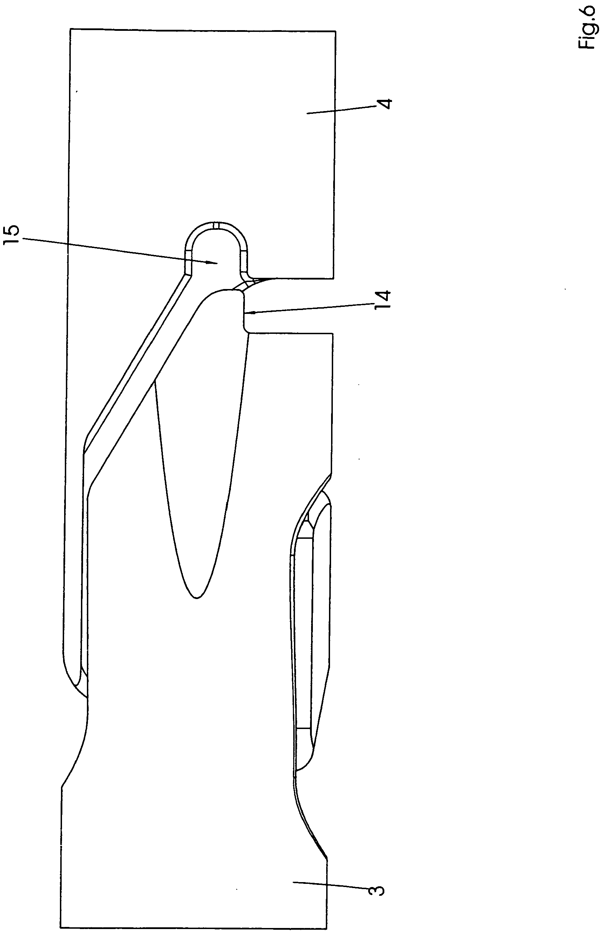

In der Seitenansicht der Fig. 6 der Steckverbindung sind an den Gestängeschüssen 3, 4 ausgebildete Verriegelungselemente in Form von Sicherungsvorsprung 14 und Vertiefung 15 gezeigt. Der Gestängeschuss 3 weist an dem mit der Queröffnung 5 versehenden Ende zwei Sicherungsvorsprünge 14 auf. Die Sicherungsvorsprünge 14 sind abgerundet ausgestaltet und etwa um 90° versetzt um die Längsrichtung des Gestängeschusses 3 zur Queröffnung 5 angeordnet. Der Gestängeschuss 4 weist im Bereich des Querstegs 6 ausgebildete Vertiefungen 15 auf. Die Vertiefungen 15 sind abgerundet ausgestaltet und je eine Vertiefung 15 ist um 90° versetzt zum Quersteg 6 an dem Gestängeschuss 4 angeordnet. Die Form des Sicherungsvorsprungs 14 und der Vertiefung 15 ist aufeinander angepasst. Der Sicherungsvorsprung 14 kann in die Vertiefung 15 mit geringem Spiel in Eingriff gelangen. Bei der Ausübung einer Druckbelastung auf das Gestänge 2 greifen die Sicherheitsvorsprünge 14 in die Vertiefungen 15 ein, um ein Verwinkeln bei der Druckbelastung des Gestänges 2 zu verhindern.

Es sei darauf hingewiesen, dass bei den im Ausführungsbeispiel gezeigten Gestängeschüssen 3, 4 nur ein Ende der Gestängeschüsse 3, 4 gezeigt ist, das ein Element der Steckverbindung zur Verfügung stellt. Die Gestängeschüsse 3, 4 können so ausgebildet sein, dass sie an den beiden Enden je ein unterschiedliches Element der Steckverbindung aufweisen.

## Patentansprüche

1. Gestänge für eine Vorrichtung zum grabenlosen Sanieren von Rohrleitungen mit mindestens zwei Gestängeschüssen (3, 4), die über eine Steckverbindung zugfest mit-einander verbunden sind, wobei zumindest ein erster der Gestängeschüsse (3, 4) an einem Ende eine Queröffnung (5) aufweist, in die ein Quersteg (6) an einem Ende eines zweiten der Gestängeschüsse (3, 4) eingesteckt ist, wobei diejenigen Stirnflächen (7, 8) der Queröffnung (5) sowie des Querstegs (6), die infolge einer Zugbelastung des Gestänges gegeneinander gedrückt werden, bogenförmig ausgebildet sind, **dadurch gekennzeichnet, dass** der erste oder zweite Gestängeschuss (3, 4) mit mindestens einem Vorsprung (14) versehen ist, der bei einer Druckbelastung des Gestänges in eine Vertiefung (15) des anderen Gestängeschusses (3, 4) eingreift.

2. Gestänge gemäß Anspruch 1, **dadurch gekennzeichnet, dass** die Stirnflächen (7, 8) der Queröffnung (5) und des Querstegs (6) korrespondierend bogenförmig ausgebildet sind.

3. Gestänge gemäß Anspruch 1 oder 2, **dadurch gekennzeichnet, dass** der Quersteg (6) und die Queröffnung (5) so ausgebildet sind, dass ein Verwinkeln der zwei Gestängeschüsse (3, 4) um einen definierten Winkelbereich möglich ist.

4. Gestänge gemäß Anspruch 3, **dadurch gekennzeichnet, dass** die Queröffnung (5) breiter als der Quersteg (6) ausgebildet ist.

5. Gestänge gemäß einem der vorhergehenden Ansprüche, **dadurch gekennzeichnet, dass** der Quersteg (6) einen Verriegelungsvorsprung (11) aufweist, der ein Lösen der zwei verbundenen Gestängeschüsse (3, 4) durch eine Parallelverschiebung verhindert.

6. Gestänge gemäß Anspruch 5, **dadurch gekennzeichnet, dass** der Quersteg (6) und die Queröffnung (5) so ausgebildet sind, dass diese für ein Verbinden/Lösen der zwei Gestängeschüsse (3, 4) in einem Winkel zueinander angesetzt werden müssen.

7. Vorrichtung zum grabenlosen Sanieren von Rohrleitungen mit einem Linearantrieb (1) und einem Gestänge (2) gemäß einem der vorhergehenden Ansprüche, wobei der Linearantrieb (1) zur Bewegung des Gestänges (2) zumindest temporär mit dem Gestänge verbunden ist.

8. Vorrichtung gemäß Anspruch 7, **dadurch gekennzeichnet, dass** der Linearantrieb (1) formschlüssig an dem Gestänge (2) angreift.

9. Vorrichtung gemäß Anspruch 8, **dadurch gekennzeichnet, dass** der Linearantrieb (1) in Vertiefungen oder Vorsprünge eingreift, die zumindest abschnittsweise in regelmäßiger Teilung in/an den Gestängeschüssen (3, 4) vorgesehen sind.

## Claims

1. Rod assembly for a device for trenchless renovation of pipelines with at least two rod sections (3, 4) which are connected to one another by a plug connection in a tension-proof manner, wherein at least a first one of the rod sections (3, 4) has, at one end, a transversal opening (5) in which a crosspiece (6) is inserted at one end of a second one of the rod sections (3, 4), wherein those front surfaces (7, 8) of the transversal opening (5) and of the crosspiece (6), which are pressed against each other resulting from a tensile load on the rod assembly, are arch-shaped, **characterised in that** the first or second rod section (3, 4) is provided with at least one projection (14) which engages in a recess (15) in the other rod section (3, 4) when a compressive load is applied to the rod assembly.

2. Rod assembly according to claim 1, **characterised in that** the front surfaces (7, 8) of the transversal opening (5) and of the crosspiece (6) are designed so that their arch shapes correspond with each other.

3. Rod assembly according to claims 1 or 2, **characterised in that** the crosspiece (6) and the transversal opening (5) are designed such that it is possible to allow an angling of the two rod sections (3, 4) by a defined angular range.

4. Rod assembly according to claim 3, **characterised in that** the transversal opening (5) is wider that the crosspiece (6).

5. Rod assembly according to any one of the preceding claims, **characterised in that** the crosspiece (6) has a locking projection (11) which prevents the releasing of the two interconnected rod sections (3, 4) due to a parallel displacement.

6. Rod assembly according to claim 5, **characterised in that** the crosspiece (6) and the transversal opening (5) are designed such that, in order to connect/release the two rod sections (3, 4), they have to be positioned at an angle to one another.

7. Device for trenchless renovation of pipelines with a linear drive (1) and a rod assembly (2) according to any one of the preceding claims, wherein the linear drive (1) is connected to the rod assembly at least temporarily to displace the rod assembly (2).

8. Device according to claim 7, **characterised in that** the linear drive (1) engages the rod assembly (2) in a positive locking manner.

9. Device according to claim 8, **characterised in that** the linear drive (1) engages in recesses or projections that are provided at least sectionally in regular divisions in/on the rod sections (3, 4).

## Revendications

1. Timonerie destinée à un dispositif pour l'assainissement de canalisations sans tranchée avec au moins deux tronçons de tige (3, 4) résistants à la traction qui sont reliés ensemble par une connexion enfichable, au moins un premier des tronçons de tige (3, 4) présentant une ouverture transversale (5) à une extrémité dans laquelle une barrette transversale (6) est insérée à une extrémité d'un deuxième tronçon de tige (3, 4), les surfaces frontales (7, 8) de l'ouverture transversale (5) ainsi que de la barrette transversale (6), qui sont pressées l'une contre l'autre suite à une charge de traction de la timonerie, étant en forme d'arc, **caractérisée en ce que** le premier ou le deuxième tronçon de tige (3, 4) est prévu avec au moins une saillie (14) qui s'engrène dans un évidement (15) de l'autre tronçon de tige (3, 4) lors d'une charge de compression de la timonerie.

2. Timonerie selon la revendication 1, **caractérisée en ce que** les surfaces frontales (7, 8) de l'ouverture transversale (5) et de la barrette transversale (6) ont une forme en arc correspondante.

3. Timonerie selon la revendication 1 ou 2, **caractérisée en ce que** l'ouverture transversale (5) et la barrette transversale (6) sont formées de telle sorte qu'une mise en angle des deux tronçons de tige (3, 4) est possible dans une plage angulaire définie.

4. Timonerie selon la revendication 3, **caractérisée en ce que** l'ouverture transversale (5) est exécutée plus large que la barrette transversale (6).

5. Timonerie selon l'une des revendications précédentes **caractérisée en ce que** la barrette transversale (6) présente une saillie de verrouillage (11) qui empêche que les deux tronçons de tige (3, 4) reliés se détachent par un déplacement parallèle.

6. Timonerie selon la revendication 5, **caractérisée en ce que** la barrette transversale (6) et l'ouverture transversale (5) sont formées de telle sorte que celles-ci doivent être appliquées l'une sur l'autre dans un angle pour attacher/détacher les deux tronçons de tige (3, 4).

7. Dispositif destiné à l'assainissement de canalisations sans tranchée avec un entraînement linéaire (1) et une timonerie (2) selon l'une des revendications précédentes, l'entraînement linéaire (1) de la timonerie (2) étant relié au moins temporairement à la timonerie.

8. Dispositif selon la revendication 7, **caractérisé en ce que** l'entraînement linéaire (1) vient en prise par complémentarité à la timonerie (2).

9. Dispositif selon la revendication 8, **caractérisé en ce que** l'entraînement linéaire (1) s'engrène dans des évidements ou saillies qui sont prévus au moins par tronçon selon une répartition régulière dans/sur les tronçons de tige (3, 4).
